# EUROPEAN PATENT SPECIFICATION

(11) **EP 1 852 043 B1**
(45) Date of publication and mention of the grant of the patent: **14.04.2010**
(21) Application number: 07107479.3
(22) Date of filing: 04.05.2007
(51) Int. Cl.: A47J 31/00

(54) **Machine for the production of drinks, such as coffee, tea or other**
Gerät zur Herstellung von Getränken wie Kaffee, Tee oder ähnlichem
Machine pour produire des boissons, telles que le café, le thé ou autre

(30) Priority: 05.05.2006 IT UD20060118
(43) Date of publication of application: 07.11.2007
(73) Proprietor: Illycaffe' S.p.A. con Unico Socio, 34147 Trieste (IT)
(72) Inventor: Coppola, Alessandro, 34149, Trieste (IT); Spotti, Davide, 34125, Trieste (IT)
(74) Representative: Petraz, Gilberto Luigi

(56) References cited:
- WO-A-2005/053489
- WO-A1-2004/006739
- US-A- 6 123 010

## Description

### FIELD OF THE INVENTION

The present invention concerns a machine for the production of drinks, such as espresso coffee, that is, prepared automatically, tea or other, which is provided with an autonomous energy feed unit, independent and long lasting.

### BACKGROUND OF THE INVENTION

Machines for the production of espresso coffee are known, which are provided with a unit to extract the coffee by means of hot water or steam, in order to produce the espresso.

Moreover, known machines have a first unit to supply the coffee, to supply the extraction unit, and a second supply unit that accumulates and supplies said hot water or steam to the extraction unit itself.

The second supply unit is fed electrically by means of direct connection cables to an electricity supply network or bulky external accumulators.

A machine which is considered useful for the understanding of the invention is described in WO 2005/053489 A.

One disadvantage of said known machines is therefore that, in order to function, they need said connection to the electric supply or the external accumulators.

Purpose of the present invention is to achieve a machine for the production of drinks that has an integrated and long-lasting energy feed unit, and is therefore autonomous and independent of any connection to an electricity supply or external energy accumulators.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

The machine according to the present invention is able to produce drinks, such as espresso coffee, tea, chocolate, infusions, tisanes, both hot and cold, made by means of a liquid substance or steam, such as for example water and/or steam and a base component, advantageously in the solid state in powder, for example freeze dried, alternatively in the liquid state, such as syrups, juices or other, and comprising at least an aroma and/or other nutritional principles or food compounds to be extracted, such as for example coffee, coffee powder or filtered coffee, tea, powdered tea, tea leaves, tea in filters, cocoa, chocolate, powdered chocolate, milk, powdered milk, infusions, tisanes and mixtures of the above.

Advantageously, by means of the above liquid substance or steam, the base component is extracted in order to take the above aromas into solution with the liquid substance and thus produce the above drink.

The machine according to the present invention comprises an extraction unit, able to extract said base component by means of hot water or steam in order to produce said drink.

Furthermore, the machine according to the present invention comprises a first supply unit of said base component, able to supply said extraction unit, and a second supply unit able to generate the hot water or steam and to supply them to said extraction unit.

The machine according to the present invention is fed with electric energy in order to function, by means of an electric feed unit.

According to the present invention, the above electric feed unit comprises energy generation means and energy accumulation means.

Thus, advantageously, the machine according to the present invention is autonomous and independent of external energy sources, and is reliable even in conditions when, for example, it is not possible to connect to the electric power supply, to a power unit or to external energy accumulators, and it guarantees, at the same time, a long duration over time of the energy feed.

Advantageously, moreover, the machine according to the present invention does not need electric connection cables to connect it to the electricity supply, and is therefore also less bulky.

According to a further feature of the present invention, the generation means comprises at least a fuel cell able to produce mainly electric energy, of a known type.

According to the present invention, the fuel cell is able to be fed by means of an alcohol-based compound comprising at least an alcohol having the formula CₙH₂ₙ₊₂O, where n is an integer number greater than or equal to 1.

According to a variant of the present invention, the fuel cell uses ethyl alcohol, or ethanol.

The fuel cell is also able to produce as secondary products a first flow of water and a second flow of carbon dioxide, separated from said first flow.

The first flow is advantageously able to be sent as a reintegration of the water to said second supply unit, allowing to save the primary feed water, contained in a suitable tank.

Advantageously, furthermore, at least a part of the second flow of carbon dioxide is able to be pressurized and sent to the first supply unit, in order to pressurize and/or in any case keep in an inert atmosphere said base component contained therein. Thus, advantageously, the aroma and organoleptic characteristics of the base component, stored in said first supply unit, are preserved.

Advantageously, another part of the second flow of carbon dioxide can be sent to the extraction unit, to be used as a gas used to emulsify at least a part of said drink produced by the extraction unit.

### BRIEF DESCRIPTION OF THE DRAWINGS

These and other characteristics of the present invention will become apparent from the following description of a preferential form of embodiment, given as a non-restrictive example with reference to the attached drawings wherein:

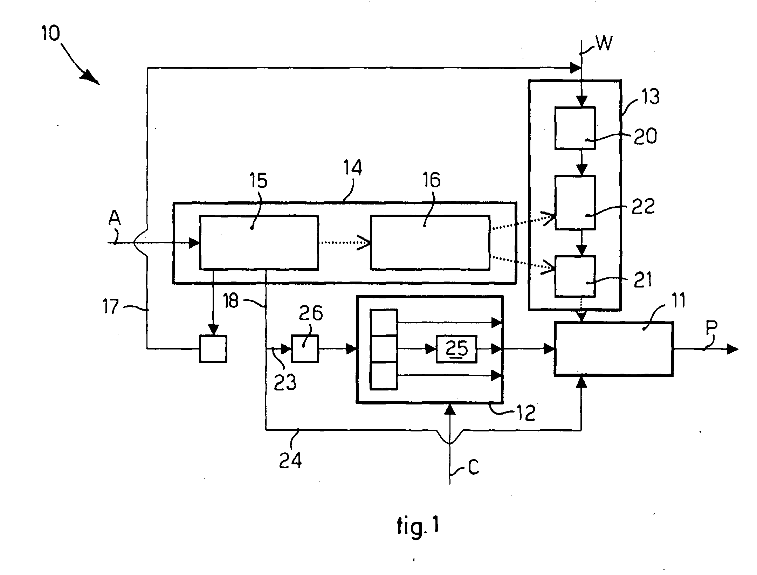

- fig. 1 is a schematic representation of the machine according to the present invention.

### DETAILED DESCRIPTION OF A PREFERENTIAL FORM OF EMBODIMENT

According to the present invention, fig. 1 shows a machine 10 for the production of drinks, in this case espresso coffee, that is, prepared automatically, also decaffeinated.

The machine 10 according to the present invention comprises an extraction unit 11, of a known type, able to extract the aromas and pigments of coffee C by means of hot water or steam W, advantageously under pressure, in order to produce the espresso, outlet flow P in fig. 1.

The machine 10 also comprises a first supply unit 12, to supply said coffee C, of a known type, which is able to supply the coffee C, advantageously automatically, to the extraction unit 11.

The coffee C is fed to the supply unit 12; it can be coffee powder as such, coffee powder contained in pods or single-dose coffee filters, of a known type, in which case supply to the extraction unit 11 can be automatic or manual, and/or coffee beans, for example freshly roasted coffee.

If the first supply unit 12 operates with coffee beans, it is also equipped with a coffee grinder 25, advantageously automatic and of a known type, to produce the coffee powder.

The extraction unit 11 receives, automatically, the hot water or the steam generated by a second supply unit 13, to which a primary flow of water W is fed, to be heated. In particular, the second supply unit 13 comprises a tank 20 to contain the water W fed and a heating boiler 21, equipped with a heating coil with an electric resistance, to produce the steam or hot water necessary for the extraction operation. The water is fed from the tank 20 to the boiler 21 by means of a pump 22.

The machine 10 also comprises an electric feed unit 14, able to supply energy for the functioning at least of said second supply unit 13, in particular to heat the water and produce hot water and/or steam to be used in the extraction operation.

Advantageously, the electric feed unit 14 supplies electric energy both to the pump 22 and also to the boiler 21, and also to any possible various services of the machine 10.

According to a characteristic feature of the present invention, the electric feed unit 14 comprises energy generation means 15 and energy accumulation means 16.

The electric energy generated by the generation means 15 is sent to the accumulation means 16, which substantially acts as an electric energy buffer.

Advantageously, the accumulation means can comprise a plurality of condensers 16, able to accumulate the energy produced by said generation means 15, so as to absorb possible peaks of energy production and deliver a constant electric power to the second supply unit 13, thus preserving the latter from excessive electric loads.

According to another characteristic feature of the present invention, the generation means comprises at least a fuel cell 15, of a known type, which supplies the energy produced in combustion to said plurality of accumulation means 16.

Advantageously, the fuel cell 15 is able to be fed for combustion, flow A in fig. 1, by an alcohol-based compound comprising at least an alcohol having the formula CₙH₂ₙ₊₂O, where n is an integer number greater than or equal to 1.

Advantageously, the alcohol used in the fuel cell is ethyl alcohol, that is, having a value n equal to 2 and the fuel cell is of the DEFC type, that is, "direct ethanol fuel cell". The alcohol-based compound can be, for example, a mixture of water and ethyl alcohol in suitable proportions.

According to an advantageous feature of the present invention, the fuel cell 15 is also able to produce as secondary products of the alcohol reaction, a first flow 17 of water and a second flow 18 of carbon dioxide, separated from said first flow 17. Advantageously, the first flow 17 is recovered and sent as reintegration of the water to the second supply unit 13, by means of a system of pipes 19, to said tank 20.

According to another characteristic of the present invention, a first part 23 of the second flow 18 of carbon dioxide is able to be pressurized, by means of possible pressurization 26 and/or accumulation means, of a known type, and sent to the first supply unit 12, in order to pressurize and keep in an inert atmosphere the inside of the first supply unit 12 and the coffee contained therein. Thus, advantageously, the inert atmosphere achieved in the second supply unit 13 preserves the aroma and organoleptic characteristics of the coffee stored therein, preventing for example the oxidation of aromas, and obtaining a high quality espresso.

According to another advantageous feature of the present invention, a second part 24 of the second flow 18 of carbon dioxide can be sent to the extraction unit 11, to be used as a gas able to emulsify at least a part of the coffee exiting the extraction unit 11. Thus, advantageously, it is possible to make a creamy version of the drink produced, improving the aesthetic appearance and taste of the drink served in the cup.

It is clear that modifications and/or additions of parts may be made to the machine for the production of drinks as described heretofore within the scope of the claims, without departing from the field and scope of the present invention. For example, the machine according to the present invention can comprise an automatic distributor of milk, hot or cold, advantageously emulsified, a sugar distributor, an automatic distributor of spoons and coffee cups, for example made of plastic.

## Claims

1. A machine for the production of drinks, such as coffee, tea or other, by means of a base component, comprising
- an extraction unit (11) able to extract said base component by means of hot water or steam, to produce said drink;
- a first supply unit (12) of said base component, able to supply said extraction unit (11);
- a second supply unit (13) able to generate said hot water or said steam, and to supply said hot water or said steam to said extraction unit (11);
- an electric feed unit (14) able to supply energy for the functioning at least of said second supply unit (13); wherein said electric feed unit (14) comprises energy generation means (15) and energy accumulation means (16), **characterized in that** said generation means comprises at least a fuel cell (15) able to be fed by means of an alcohol-based compound comprising at least an alcohol having the formula CₙH₂ₙ₊₂O, where n is an integer number greater than or equal to 1.

2. Machine as in claim 1, **characterized in that** said alcohol is ethyl alcohol.

3. Machine as in claim 1 or 2, **characterized in that** said fuel cell (15) is also able to produce, as secondary products, a first flow (17) of water and a second flow (18) of carbon dioxide, separated from said first flow (17).

4. Machine as in any claim hereinbefore, **characterized in that** said second supply unit (13) comprises a tank (20) to contain water, heating means (21) able to produce said steam or hot water, and pump means (22) able to transfer said water from said tank (20) to said heating means (21).

5. Machine as in claims 3 and 4, **characterized in that** it comprises hydraulic connection means (19) able to transfer said first flow (17), as a reintegration, from said fuel cell (15) to said tank (20).

6. Machine as in claim 3, **characterized in that** at least a first part (23) of said second flow (18) is able to be pressurized, by means of pressurization means (26) and/or accumulation means, and sent to said first supply unit (12), in order to pressurize and keep in an inert atmosphere said first supply unit (12).

7. Machine as in claim 3, **characterized in that** at least a second part (24) of said second flow (18) is able to be sent to said extraction unit (11), in order to be used as a gas suitable to emulsify at least a part of said drink produced by said extraction unit (11).

8. Machine as in any claim hereinbefore, **characterized in that** said first supply unit (12) is able to operate with coffee beans.

9. Machine as in claim 8, **characterized in that** said first supply unit (12) comprises grinding means (25) able to grind said coffee beans in order to produce said coffee powder.

10. Machine as in any claim hereinbefore, **characterized in that** said first supply unit (12) is able to operate with coffee powder.

11. Machine as in any claim hereinbefore, **characterized in that** said first supply unit (12) is able to operate with pods or filters containing coffee powder.

## Patentansprüche

1. Maschine zur Herstellung von Getränken, wie zum Beispiel Kaffee, Tee oder anderen, mittels einer Basiskomponente, umfassend:
- eine Extraktionseinheit (11), die dazu fähig ist, die Basiskomponente mittels heißen Wassers oder Wasserdampfs zu extrahieren, um das Getränk herzustellen;
- eine erste Zuführeinheit (12) der Basiskomponente, die dazu fähig ist, die Extraktionseinheit (11) zu beliefern;
- eine zweite Zuführeinheit (13), die dazu fähig ist, das heiße Wasser oder den Wasserdampf zu erzeugen und das heiße Wasser oder den Wasserdampf an die Extraktionseinheit (11) zu liefern;
- eine elektrische Versorgungseinheit (14), die dazu fähig ist, Energie zum Betrieb mindestens der zweiten Zuführeinheit (13) zu liefern;
wobei die elektrische Versorgungseinheit (14) Stromerzeugungsmittel (15) und Stromakkumulationsmittel (16) umfasst,
**dadurch gekennzeichnet, dass** das Erzeugungsmittel mindestens eine Brennstoffzelle (15) umfasst, die dazu fähig ist, mit einer auf Alkohol basierenden Verbindung gespeist zu werden, die mindestens einen Alkohol der Formel CₙH₂ₙ₊₂O umfasst, wobei n eine ganze Zahl größer oder gleich 1 ist.

2. Maschine nach Anspruch 1, **dadurch gekennzeichnet, dass** der Alkohol Ethylalkohol ist.

3. Maschine nach Anspruch 1 oder 2, **dadurch gekennzeichnet, dass** die Brennstoffzelle (15) auch dazu fähig ist, als Sekundärprodukte einen ersten Strom (17) aus Wasser und einen zweiten Strom (18) aus Kohlendioxid, der vom ersten Strom (17) getrennt ist, zu produzieren.

4. Maschine nach einem der vorhergehenden Ansprüche, **dadurch gekennzeichnet, dass** die zweite Zuführeinheit (13) einen Tank (20) zum Enthalten von Wasser, ein Heizmittel (21), das dazu fähig ist, den Wasserdampf oder das heiße Wasser zu erzeugen, und ein Pumpmittel (22) umfasst, das dazu fähig ist, das Wasser vom Tank (20) zu dem Heizmittel (21) zu überführen.

5. Maschine nach den Ansprüchen 3 und 4, **dadurch gekennzeichnet, dass** sie ein hydraulisches Verbindungsmittel (19) umfasst, das dazu fähig ist, den ersten Strom (17) als eine Rückführung von der Brennstoffzelle (15) in den Tank (20) zu überführen.

6. Maschine nach Anspruch 3, **dadurch gekennzeichnet, dass** mindestens ein erster Teil (23) des zweiten Stroms (18) dazu fähig ist, mittels eines Druckmittels (26) und/oder Akkumulationsmittels unter Druck gesetzt und zur ersten Zuführeinheit (12) gebracht zu werden, um die erste Zuführeinheit (12) unter Druck zu setzen und in einer inerten Atmosphäre zu halten.

7. Maschine nach Anspruch 3, **dadurch gekennzeichnet, dass** mindestens ein zweiter Teil (24) des zweiten Stroms (18) dazu fähig ist, zur Extraktionseinheit (11) geleitet zu werden, um als ein Gas verwendet zu werden, das dazu geeignet ist, mindestens einen Teil des von der Extraktionseinheit (11) hergestellten Getränks zu emulgieren.

8. Maschine nach einem der vorhergehenden Ansprüche, **dadurch gekennzeichnet, dass** die erste Zuführeinheit (12) dazu fähig ist, mit Kaffeebohnen betrieben zu werden.

9. Maschine nach Anspruch 8, **dadurch gekennzeichnet, dass** die erste Zuführeinheit (12) Mahlmittel (25) umfasst, die dazu fähig sind, die Kaffeebohnen zu mahlen, um das Kaffeepulver zu erzeugen.

10. Maschine nach einem der vorhergehenden Ansprüche, **dadurch gekennzeichnet, dass** die erste Zuführeinheit (12) dazu fähig ist, mit Kaffeepulver betrieben zu werden.

11. Maschine nach einem der vorhergehenden Ansprüche, **dadurch gekennzeichnet, dass** die erste Zuführeinheit (12) dazu fähig ist, mit Kaffeepulver enthaltenden Pods oder Filtern betrieben zu werden.

## Revendications

1. Machine pour la production de boissons, telles que du café, du thé ou autre, au moyen d'un composant de base, comprenant :
une unité d'extraction (11) pouvant extraire ledit composant de base au moyen d'eau chaude ou de vapeur pour produire ladite boisson ;
une première unité d'alimentation (12) dudit composant de base, pouvant alimenter ladite unité d'extraction (11) ;
une seconde unité d'alimentation (13) pouvant générer ladite eau chaude ou ladite vapeur, et alimenter ladite eau chaude ou ladite vapeur à ladite unité d'extraction (11) ;
une unité d'alimentation électrique (14) pouvant alimenter l'énergie pour le fonctionnement d'au moins ladite seconde unité d'alimentation (13) ;
dans laquelle ladite unité d'alimentation électrique (14) comprend des moyens de génération d'énergie (15) et des moyens d'accumulation d'énergie (16), **caractérisée en ce que** lesdits moyens de génération comprennent au moins une pile à combustible (15) pouvant être alimentée au moyen d'un composé à base d'alcool comprenant au moins un alcool ayant la formule CₙH₂ₙ₊₂O, où n est un nombre entier supérieur ou égal à 1.

2. Machine selon la revendication 1, **caractérisée en ce que** ledit alcool est de l'alcool éthylique.

3. Machine selon la revendication 1 ou 2, **caractérisée en ce que** ladite pile à combustible (15) peut également produire, en tant que produits secondaires, un premier écoulement (17) d'eau et un second écoulement (18) de dioxyde de carbone, séparé dudit premier écoulement (17).

4. Machine selon l'une quelconque des revendications précédentes, **caractérisée en ce que** ladite seconde unité d'alimentation (13) comprend un réservoir (20) pour contenir l'eau, des moyens de chauffage (21) pouvant produire ladite vapeur ou l'eau chaude, et des moyens de pompe (22) pouvant transférer ladite eau dudit réservoir (20) auxdits moyens de chauffage (21).

5. Machine selon la revendication 3 ou 4, **caractérisée en ce qu'**elle comprend des moyens de raccordement hydraulique (19) pouvant transférer ledit premier écoulement (17) en tant que réintégration, de ladite pile à combustible (15) audit réservoir (20).

6. Machine selon la revendication 3, **caractérisée en ce qu'**au moins une première partie (23) dudit second écoulement (18) peut être mise sous pression, au moyen de moyens de mise sous pression (26) et/ou de moyens d'accumulation, et envoyer à ladite première unité d'alimentation (12) afin de mettre sous pression et de maintenir dans une atmosphère inerte ladite première unité d'alimentation (12).

7. Machine selon la revendication 3, **caractérisée en ce qu'**au moins une seconde partie (24) dudit second écoulement (18) peut être envoyée vers ladite unité d'extraction (11) afin d'être utilisée en tant que gaz approprié pour émulsifier au moins une partie de ladite boisson produite par ladite unité d'extraction (11).

8. Machine selon l'une quelconque des revendications précédentes, **caractérisée en ce que** ladite première unité d'alimentation (12) peut fonctionner avec des grains de café.

9. Machine selon la revendication 8, **caractérisée en ce que** la première unité d'alimentation (12) comprend des moyens de meulage (25) pouvant moudre lesdits grains de café afin de produire ladite poudre de café.

10. Machine selon l'une quelconque des revendications précédentes, **caractérisée en ce que** ladite première unité d'alimentation (12) peut fonctionner avec du café en poudre.

11. Machine selon l'une quelconque des revendications précédentes, **caractérisée en ce que** ladite première unité d'alimentation (12) peut fonctionner avec des capsules ou des filtres contenant le café en poudre.
